# FASCICULE DE BREVET EUROPEEN

(11) **EP 0 727 021 B1**
(45) Date de publication et mention de la délivrance du brevet: **22.03.2000**
(21) Numéro de dépôt: 95929138.6
(22) Date de dépôt: 25.08.1995
(51) Int. Cl.: F16K 3/08, F17C 13/04, G05D 7/01

(54) **ENSEMBLE DE COMMANDE ET DE DISTRIBUTION DE GAZ ET DISPOSITIF DE STOCKAGE DE GAZ EQUIPE D'UN TEL ENSEMBLE**
STEUEREINHEIT FÜR GASVERTEILUNG UND GASBEHÄLTER AUSGESTATTET MIT SOLCHER EINHEIT
GAS CONTROL AND DISPENSING ASSEMBLY AND GAS STORAGE DEVICE COMPRISING SUCH A UNIT

(30) Priorité: 02.09.1994 FR 9410543
(43) Date de publication de la demande: 21.08.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: CANNET, Gilles, F-95620 Parwain (FR); FANO, Emmanuel, F-94210 La-Varenne-Saint-Hilaire (FR); ROBIN, Alain, F-75011 Paris (FR)
(74) Mandataire: Le Moenner, Gabriel
(86) Numéro de dépôt international: FR9501122
(87) Numéro de publication internationale: WO9607843

(56) Documents cités:
- FR-A- 744 450
- FR-A- 1 540 575
- FR-A- 2 619 432
- US-A- 4 011 893

## Description

La présente invention concerne un ensemble de commande et de distribution de gaz, destiné à être monté sur un réservoir ou dispositif de stockage contenant ledit gaz sous une moyenne ou haute pression, comportant une partie amont, ayant un axe, de raccordement au réservoir, une sortie de gaz basse pression et, dans un circuit de gaz entre la partie de raccordement et la sortie de gaz à basse pression, un moyen détendeur de pression et un moyen régulateur de débit.

Les grandes lignes d'un ensemble de ce type sont décrites dans le document WO-93/20383 au nom de la Demanderesse qui décrit par ailleurs une capacité intermédiaire de gaz, rechargeable en un poste de rechargement et transportable dans un châssis permettant son accouplement à un dispositif utilisateur.

La présente invention a pour objet de proposer un ensemble de commande et de distribution du type défini ci-dessus, de conception simple et fiable, se présentant sous une forme compacte et ergonomique, convenant à tous types de dispositifs de stockage de gaz et tout particulièrement à des capacités intermédiaires carrossées selon le document ci-dessus.

Pour ce faire, selon un aspect de l'invention, le moyen détendeur est disposé dans la partie amont, et le moyen régulateur et la sortie de gaz basse pression sont disposés dans une partie aval coaxiale à la partie amont et solidarisable à cette dernière dans une position angulaire relative quelconque.

Selon d'autres caractéristiques de l'invention :
- la partie avale est solidarisée à la partie amont via une bague comportant un taraudage coopérant avec une extrémité filetée d'une des parties, et un épaulement annulaire coopérant avec une butée axiale formée sur l'autre partie ;
- le moyen régulateur de débit comprend un équipage indexable tournant dans la partie aval et dans un capot d'indexation fixé sur la partie avale par un raccord de sortie de gaz basse pression ;
- la partie amont comporte un filetage cylindrique droit de raccordement à un taraudage cylindrique du réservoir.

Avec un agencement selon l'invention, la partie amont, portant un certain nombre de raccords de sortie, peut être positionnée angulairement dans une configuration choisie facilitant le raccordement des sorties à leurs circuits aval et, indépendamment de ce positionnement de la partie amont, la partie aval, portant le raccord de sortie basse pression et la molette indexable du débitmètre, peut être positionnée vis-à-vis de la partie amont dans la configuration adéquate, également choisie par rapport à son environnement, notamment dans un capotage selon le document susmentionné.

Selon d'autres caractéristiques particulières de l'invention :
- l'ensemble comporte des moyens de liaison temporaires entre l'équipage tournant et le moyen détendeur pour actionner sélectivement celui-ci ;
- le moyen détendeur comporte un équipage coulissant d'un clapet et d'un piston et les moyens de liaison comportent un moyen de came porté par l'équipage tournant du moyen régulateur de débit et coopérant sélectivement avec le piston du moyen détendeur.

Avec un tel agencement, la fonction "robinet de fermeture" du moyen détendeur de débit, classiquement obtenue par une zone non percée du barillet tournant, est assurée ici, de façon positive par fermeture du clapet de l'équipage mobile du moyen détendeur par déplacement forcé de ce dernier à l'encontre de son ressort de régulation.

Selon une autre caractéristique de l'invention, la partie amont comporte un passage de gaz de remplissage distinct du circuit de gaz.

Un tel agencement permet de protéger les constituants de l'ensemble de commande et de distribution des risques de compression adiabatiques lors du remplissage du réservoir, si celui-ci doit s'effectuer, selon les normes locales, par le même passage du réservoir que le passage de sortie de gaz.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une vue schématique en coupe longitudinale d'un ensemble de commande et de distribution de gaz selon l'invention monté sur un réservoir ; et
- la figure 2 est une vue en bout, du dessous, de l'ensemble de la figure 1.

Dans le mode de réalisation représenté, un ensemble selon l'invention comprend typiquement une partie amont ou bloc inférieur 1 ayant un axe longitudinal, comprenant une extrémité inférieure cylindrique filetée 2 pour son montage dans un passage taraudé 3 d'un réservoir 4 de gaz sous pression, et une partie aval ou bloc supérieur 5 montée coaxialement sur le bloc inférieur 1, dans le prolongement de ce dernier.

Le bloc inférieur 1 comporte un alésage étagé inférieur 6 servant au montage d'un ensemble filtre-valve de retenue 7 et communiquant avec un alésage supérieur 8 dans lequel coulisse la queue, portant un clapet d'extrémité 9, d'un piston 10 d'un équipage mobile axialement d'un moyen de détendeur comportant un ressort taré 11 écartant normalement le clapet 9 de son siège 12 formé dans le fond de l'alésage 8. Le piston 10 comporte un passage de gaz central 13 établissant la communication entre la face supérieure du piston 10 et l'alésage 8.

Dans le bloc supérieur 5 est monté à rotation autour de l'axe de l'ensemble un barillet 13 déplaçable en rotation par une molette d'actionnement 14 immobilisable dans des positions angulaires déterminées par une bille 15 sollicitée élastiquement, portée par le bloc supérieur 5 et coopérant avec des ouvertures angulairement réparties 16 formées dans la molette 14. Le barillet 13 comporte une série de passages angulairement répartis 17 de sections différentes venant, dans les positions d'indexation successives, en alignement avec un passage calibré axial 18 formé dans le bloc 5 et débouchant dans un passage transversal 19 débouchant vers l'extérieur et destiné à recevoir un raccord de sortie de gaz basse pression 20. Le raccord 20 est monté dans le bloc supérieur 5 en passant à travers une ouverture 21 de dimensions correspondantes formée dans une jupe périphérique d'un capotage 22 enclosant la majeure partie de la molette 14 et du corps supérieur 5 et comportant une découpe 23 formant une fenêtre par laquelle apparaissent des graduations ou des chiffres formés sur la molette 14 et indiquant les positions angulaires respectives du barillet 13, et donc les débits de gaz basse pression s'écoulant depuis l'alésage 6 jusqu'au passage 19 via l'alésage central 8, le passage 13 du piston, l'un des passages calibrés 17 du barillet 13 et le passage axial 18 du corps supérieur 5.

Selon un aspect de l'invention, le corps supérieur 5 est monté, dans une position angulaire relative indifférente, sur le corps inférieur 1 au moyen d'une bague 24 enfilée sur le corps inférieur 1 et venant buter, par un épaulement radial interne 25, contre une butée radiale externe 26 du corps inférieur 1. Dans le mode de réalisation représenté, la bague 24 comporte une partie supérieure taraudée coopérant avec une partie d'extrémité inférieure filetée 27 du bloc supérieur 5 étanchéifiée, vis-à-vis de l'extrémité supérieure du bloc inférieur 1, par un joint torique.

Avec un tel agencement, comme sus-mentionné, on peut monter et verrouiller le bloc inférieur 1 dans le réservoir 4 dans une position angulaire choisie convenant au raccordement des différentes sorties avec des circuits aval, et le bloc supérieur 5 également dans une position déterminée quelconque par rapport au bloc 1, convenant en particulier pour la lecture des indications de débit par la fenêtre 23.

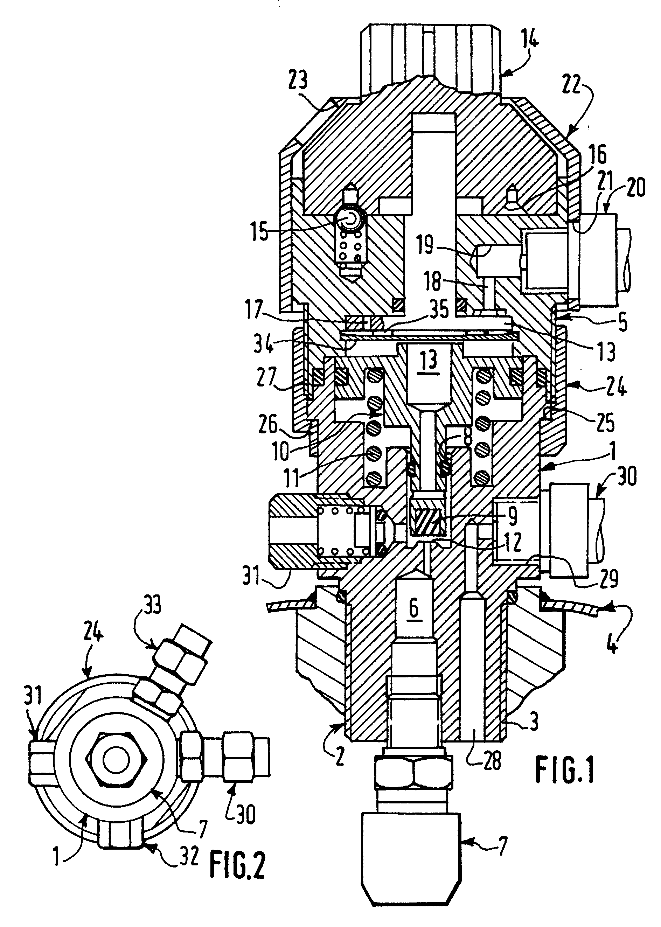

Selon un aspect de l'invention, comme on le voit sur les figures 1 et 2, le bloc inférieur 1 comporte un alésage étagé supplémentaire 28 décalé latéralement de l'alésage principal 6 et débouchant dans un passage transversal 29 servant au montage d'un raccord de remplissage et de retenue 30 permettant le remplissage du réservoir 4 sans passer par le circuit de sortie de gaz de l'ensemble. Dans un passage transversal en vis-à-vis du passage 29, débouchant dans l'alésage 8, est montée une soupape de sécurité basse pression 31. Avantageusement, comme on le voit sur la figure 2, une soupape de sécurité haute pression 32 et un raccord 33 de raccordement à un manomètre sont montés dans des passages transversaux du corps inférieur 1 communiquant avec le passage 6 ou le passage 28.

Selon un aspect de l'invention, la fonction "robinet de fermeture" assurée par le secteur non perforé du barillet 13 est complétée par un actionnement positif du piston 10 à l'encontre du ressort 11 pour plaquer le clapet 9 sur son siège 12 et isoler ainsi le passage 6 des portions amont du circuit de sortie de gaz. Comme on le voit sur la figure 1, une lame élastique 34, par exemple constituée par une fine tige d'acier délardée, montée dans le bloc supérieur 5, s'étend transversalement au-dessus d'une extrémité avant du piston 10, ne contrariant normalement pas le déplacement axial de ce dernier. Sur la face avant du barillet 13 sont ménagés deux éléments de came 35 susceptibles, au voisinage de la position angulaire du barillet correspondant à la position de fermeture, de coopérer avec la lame 34 pour repousser celle-ci axialement vers le bas et, partant, repousser également le piston 10 vers le bas, à l'encontre du ressort 11, pour plaquer le clapet 9 sur son siège 12, réalisant ainsi une double isolation entre le passage de sortie 19 et le passage d'entrée 6. L'enclenchement des cames 35 sur la lame 34 donne de plus à l'utilisateur une sensation de point dur permettant un repérage tactile de la position à débit nul en sus de l'indication visuelle dans la fenêtre 23.

Quoique la présente invention ait été décrite en relation avec des modes de réalisation particuliers, elle ne s'en trouve pas limitée mais est au contraire susceptible de modifications et de variantes qui apparaîtront à l'homme de l'art, dans le cadre des revendications ci-après.

## Revendications

1. Ensemble de commande et de distribution de gaz, destiné à être monté sur un réservoir (4) contenant ledit gaz sous pression, comportant une partie amont (1), ayant un axe de raccordement au réservoir (4), une sortie de gaz basse pression (19) et, dans un circuit de gaz entre la partie de raccordement (1) et la sortie de gaz (19), un moyen détendeur de pression (10, 9) et un moyen régulateur de débit (13,14,17) caractérisé en ce que le moyen détendeur (10, 9) est disposé dans la partie amont (1) et en ce que le moyen régulateur (13,14,17) et la sortie de gaz basse pression (19) sont disposés dans une partie avale (5) coaxiale à la partie amont (1) et solidarisable à cette dernière dans une position angulaire relative quelconque par rapport à l'axe.

2. Ensemble selon la revendication 1, caractérisé en ce que la partie avale(5) est solidarisée à la partie amont (1) via une bague (24) comportant un taraudage coopérant avec une extrémité filetée (27) d'une des parties (1 ; 5) et un épaulement annulaire (25) coopérant avec une butée axiale (26) formée sur l'autre partie (5; 1).

3. Ensemble selon la revendication 1 ou la revendication 2, caractérisé en ce que le moyen régulateur de débit (13,14,17) comprend un équipage indexable (13, 14) tournant dans la partie aval (5) et dans un capot d'indexation (22) fixé sur la partie aval par un raccord (20) de sortie de gaz basse pression.

4. Ensemble selon la revendication 3, caractérisé en ce qu'il comporte des moyens de liaison temporaire (35, 34) entre l'équipage tournant (13, 14) du moyen régulateur de débit et le moyen détendeur (10, 9) pour actionner sélectivement ce dernier.

5. Ensemble selon la revendication 4, caractérisé en ce que le moyen détendeur comporte un équipage coulissant d'un clapet (9) et d'un piston (10), et en ce que les moyens de liaison comportent un moyen de came (35) porté par l'équipage tournant (13, 14) du moyen régulateur de débit et coopérant sélectivement avec le piston (10).

6. Ensemble selon l'une des revendications précédentes, caractérisé en ce que la partie amont (1) comporte un filetage cylindrique droit (2) de raccordement à un taraudage cylindrique (3) du réservoir (4).

7. Ensemble selon l'une des revendications précédentes, caractérisé en ce que la partie amont (1) comporte un passage de gaz de remplissage (29, 28) distinct du circuit de gaz (6, 8, 18, 19).

8. Dispositif de stockage de gaz comprenant un réservoir de gaz (4) équipé d'un ensemble selon l'une des revendications 1 à 7.

## Patentansprüche

1. Einheit zur Steuerung und Verteilung von Gas, die an einem das Druckgas enthaltenden Behälter (4) angebracht werden soll und folgendes aufweist: einen stromaufwärts gelegenen, eine Achse aufweisenden Teil (1) zur Verbindung mit dem Behälter (4), einen Niederdruckgasausgang (19) und, in einem Gaskreislauf zwischen dem Verbindungsteil (1) und dem Gasausgang (19), ein Druckmindermittel (10, 9) und ein Durchflußregelmittel (13, 14, 17), dadurch gekennzeichnet, daß das Druckmindermittel (10, 9) in dem stromaufwärts gelegenen Teil (1) angeordnet ist und daß das Regelmittel (13, 14, 17) und der Niederdruckgasausgang (19) in einem stromabwärts gelegenen Teil (5) angeordnet sind, der mit dem stromaufwärts gelegenen Teil (1) koaxial ist und mit diesem in einer beliebigen Winkelposition bezüglich der Achse fest verbunden werden kann.

2. Einheit nach Anspruch 1, dadurch gekennzeichnet, daß der stromabwärts gelegene Teil (5) über einen mit Innengewinde versehenen Ring (24), der mit einem mit einem Gewinde versehenen Ende (27) eines der Teile (1; 5) und einer mit einem an dem anderen Teil (5; 1) ausgebildeten axialen Anschlag (26) zusammenwirkenden, ringförmigen Schulter (25) zusammenwirkt, mit dem stromaufwärts gelegenen Teil (1) fest verbunden ist.

3. Einheit nach Anspruch 1 oder 2, dadurch gekennzeichnet, daß das Durchflußregelmittel (13, 14, 17) ein einrastbares Organ (13, 14) aufweist, das sich in dem stromabwärts gelegenen Teil (5) und in einer Rasthaube (22) dreht, welche durch einen Anschluß (20) des Niederdruckgasausgangs an dem stromabwärts gelegenen Teil befestigt ist.

4. Einheit nach Anspruch 3, dadurch gekennzeichnet, daß sie Mittel (35, 34) zur vorübergehenden Verbindung zwischen dem Drehglied (13, 14) des Durchflußregelmittels und dem Druckmindermittel (10, 9) zur gezielten Betätigung des letzteren aufweist.

5. Einheit nach Anspruch 4, dadurch gekennzeichnet, daß das Druckmindermittel ein Schiebeglied einer-Klappe (9) und eines Kolbens (10) aufweist und daß die Verbindungsmittel ein Nockenmittel (35) aufweisen, das von dem Drehglied (13, 14) des Durchflußregelmittels getragen wird und mit dem Kolben (10) gezielt zusammenwirkt.

6. Einheit nach einem der vorhergehenden Ansprüche, dadurch gekennzeichnet, daß der stromaufwärts gelegene Teil (1) ein zylindrisches Rechtsgewinde (2) zur Verbindung mit einem zylindrischen Innengewinde (3) des Behälters (4) aufweist.

7. Einheit nach einem der vorhergehenden Ansprüche, dadurch gekennzeichnet, daß der stromaufwärts gelegene Teil (1) einen vom Gaskreislauf (6, 8, 18, 19) getrennten Füllgasdurchgang (29, 28) aufweist.

8. Gasspeichervorrichtung mit einem Gasbehälter (4), der mit einer Einheit gemäß einem der Ansprüche 1 bis 7 ausgestattet ist.

## Claims

1. Gas control and dispensing assembly, intended to be mounted on a tank (4) containing the said gas under pressure, comprising an upstream part (1), having an axis for connection to the tank (4), a low-pressure gas outlet (19) and, in a gas circuit between the connection part (1) and the gas outlet (19), a pressure reducer means (10, 9) and a flow regulator means (13, 14, 17), characterized in that the reducer means (10, 9) is arranged in the upstream part (1) and in that the regulator means (13, 14, 17) and the low-pressure gas outlet (19) are arranged in a downstream part (5), coaxially with the upstream part (1) and securable to the latter in an arbitrary relative angular position with respect to the axis.

2. Assembly according to Claim 1, characterized in that the downstream part (5) is secured to the upstream part (1) via a ring (24) having an internal screw thread cooperating with a threaded end (27) of one of the parts (1; 5) and an annular shoulder (25) cooperating with an axial stop (26) formed on the other part (5; 1).

3. Assembly according to Claim 1 or Claim 2, characterized in that the flow regulator means (13, 14, 17) comprises an indexable equipment item (13, 14) rotating in the downstream part (5) and in an indexing cap (22) fixed on the downstream part by a low-pressure gas outlet connector (20).

4. Assembly according to Claim 3, characterized in that it comprises means (35, 34) for temporary connection between the rotating equipment item (13, 14) of the flow regulator means and the reducer means (9, 10) for selectively actuating the latter.

5. Assembly according to Claim 4, characterized in that the reducer means comprises a sliding equipment item consisting of a valve (9) and a piston (10), and in that the connection means comprise a cam means (35), carried by the rotating equipment item (13, 14) of the flow regulator means and selectively cooperating with the piston (10).

6. Assembly according to one of the preceding claims, characterized in that the upstream part (1) comprises a straight cylindrical screw thread (2) for connection to a cylindrical internal screw thread (3) of the tank (4).

7. Assembly according to one of the preceding claims, characterized in that the upstream part (1) includes a filling gas passage (29, 28) separate from the gas circuit (6, 8, 18, 19).

8. Gas storage device comprising a gas tank (4) equipped with an assembly according to one of Claims 1 to 7.
